# EUROPÄISCHE PATENTSCHRIFT

(11) **EP 2 755 014 B1**
(45) Veröffentlichungstag und Bekanntmachung des Hinweises auf die Patenterteilung: **06.05.2015**
(21) Anmeldenummer: 13005943.9
(22) Anmeldetag: 19.12.2013
(51) Int. Cl.: G01N 1/20

(54) **Brauchwasser-Zufuhr- und Entnahmesystem für einen Waschtisch sowie Probenahmeventil für ein solches System**
Service water supply and extraction system for a washing table and sampling valve for such a system
Système d'acheminement et de soutirage d'eau sanitaire pour un lavabo et vanne de prélèvement d'échantillons pour un tel système

(30) Priorität: 10.01.2013 DE 202013000217 U
(43) Veröffentlichungstag der Anmeldung: 16.07.2014
(73) Patentinhaber: Gebr. Kemper GmbH + Co. KG Metallwerke, 57462 Olpe (DE)
(72) Erfinder: Kelbassa, Rainer, 57439 Attendorn (DE); Petzolt, Ulrich, 51598 Friesenhagen (DE)
(74) Vertreter: Grünecker Patent- und Rechtsanwälte PartG mbB

(56) Entgegenhaltungen:
- EP-A1- 1 876 230
- US-A- 2 426 369

## Beschreibung

Die vorliegende Erfindung betrifft ein Probenahmeventil mit den oberbegrifflichen Merkmalen von Anspruch 4.

Ein gattungsgemäßes Probenahmeventil ist beispielsweise aus der US 2 426 369 A bekannt. Ein weiteres Probenahmeventil ist aus der EP 1 876 230 A1 bekannt.

Gemäß einem nebengeordneten Aspekt nach Anspruch 1 betrifft die Erfindung des Weiteren ein Brauchwasser-Zufuhr- und Entnahmesystem für einen Waschtisch mit einem Probenahmeventil. Die vorliegende Erfindung will insbesondere eine Maßnahme zur Probenahme in einer Wohnung bzw. an einer Zapfstelle für Wasser verbessern.

Mitunter wird eine solche Probenahme zwischen einem Eckventil und einem Wasserhahn zur Entnahme von Wasser durchgeführt. Es ist das Ziel, die Probenahme möglichst nah an dem jeweiligen Verbraucher durchzuführen. Das Eckventil stellt heutzutage den üblichen Anschluss zwischen einem unter Putz verlegten Leitungssystem und einer in einem Gebäude an Möbeln wie Waschtischen oder Waschbecken einer Arbeitsplatte einer Einbauküche befindlichen Armatur dar. Entsprechende Waschtisch- oder Küchentischarmaturen sind üblicherweise als Mischarmaturen ausgebildet. Abhängig von dem konkreten Aufbau der Tischarmatur kann es sein, dass auch bei geschlossener Tischarmatur, d. h. abgesperrter Wasserentnahmeöffnung an der Tischarmatur, zwar ein Auslaufen von Wasser in das zugeordnete Becken unterbunden wird, allerdings ein Kurzschluss der zu der Armatur führenden Kaltwasserleitung und der zu der Armatur führenden Warmwasserleitung durch die Armatur bewirkt wird. Solche bekannten Eckventile haben üblicherweise eine Anschlussleitung zum Anschluss an eine Mischarmatur.

Probenahmeventile für Warmwasserrohrsysteme sind allgemein bekannt. Gemäß der deutschen Trinkwasserverordnung sind solche Probenahmeventile üblicherweise in einem Warmwasserrohrsystem direkt an einem Ausgang eines Warmwasserboilers in Strömungsrichtung hinter diesem Boiler angeschlossen. So ist eine Probenahme und Untersuchung des warmen Wassers auf Verkeimung direkt hinter dem Warmwasserboiler möglich.

Zudem ist nach der deutschen Trinkwasserverordnung eine Probenahme im Warmwasserstrang an der entferntest gelegenen Stelle nötig. Hierzu wird üblicherweise dort an einem Verbraucher, insbesondere einem Wasserhahn die Probe genommen. Dazu wird der Wasserhahn betätigt, also geöffnet und das so abgegebene warme Wasser unter wohl definierten Randbedingungen als Probe gewonnen und auf Verkeimung untersucht.

Um eine von außen in das System eintretende Verkeimung bei der Untersuchung auszuschließen, wird üblicherweise bei einer solchen Entnahme aus einem Wasserhahn dessen Filtersieb abmontiert, bevor eine Wasserprobe genommen wird. Bei einer Wasserentnahme direkt an der Mischarmatur bzw. dem Wasserhahn ist eine Vermischung von warmem und kaltem Wasser oftmals unvermeidlich.

Bei den direkt hinter einem Boiler anzuschließenden Probenahmeventilen geht man üblicherweise von einer Einheit, d.h. einem separaten einheitlichen Bauelement aus, welches in die Ausgangsleitung des Warmwasserboilers unter Abtrennung eines Rohrstücks eingesetzt wird.

Der vorliegenden Erfindung liegt das Problem zugrunde, ein Brauchwasser-Zufuhr- und Entnahmesystem der eingangs genannten Art anzugeben, mit dem die Möglichkeit der Probenahme verbessert ist.

Zur Lösung dieser Aufgabe ein System gemäß Anspruch 1 vorgeschlagen..

Der Rückflussverhinderer ist in dem Gehäuse bzw. im Strömungsdurchgang des Probenahmeventils angeordnet, üblicherweise unverlierbar dort montiert, vorzugsweise durch einen in einer an dem Gehäuse ausgesparten Nut eingelassenen Sicherungsring. Unverlierbar in diesem Sinne bedeutet insbesondere, dass der Rückflussverhinderer nicht durch einfache handwerkliche Maßnahmen ausgebaut werden kann. Durch die Weiterbildung wird gewährleistet, dass das Probenahmeventil immer zusammen mit dem Rückflussverhinderer zuverlässig eingebaut wird. Der das Zufuhr- und Entnahmesystem für den Waschtisch montierende Handwerker kann nicht ohne Weiteres den Rückflussverhinderer aus dem Gehäuse entnehmen und daher das Probenahmeventil ohne Rückflussverhinderer montieren.

Sofern in dieser Anmeldung auf einen "Waschtisch" abgestellt wird, kann dies ein Waschtisch für die Körperpflege oder für die Reinigung von Gerätschaften bzw. Lebensmitteln sein. Die vorliegende Erfindung ist insbesondere nicht auf ein Zufuhr- und Entnahmesystem für Brauchwasser beschränkt, welches allein in einem Badezimmer montiert ist. Dabei hat die vorliegende Erfindung insbesondere solche Zufuhr- und Entnahmesysteme im Sinn, bei denen aufgrund der spezifischen Konstruktion der Tischarmatur die Möglichkeit gegeben ist, dass die Kaltwasser- und die Warmwasserzufuhr über die Tischarmatur kurzgeschlossen werden. Die Rohrstücke des Gegenstandes sind üblicherweise standardmäßig an einer Tischarmatur vorgesehen und dienen dem Anschluss der Armatur unmittelbar an das Eckventil. Alternativ können auch flexiblere Schlauchstücke vorgesehen sein. Statt dieses Eckventils ist bei dem erfindungsgemäßen Zufuhr- und Entnahmesystem das Probenahmeventil für die Probenahme vorgesehen, an welchem der Anschluss der Rohrstücke erfolgt.

Das Probenahmeventil der vorliegenden Erfindung, welches für sich mit Anspruch 4 unter Schutz gestellt wird, hat ein ein- oder mehrteiliges Gehäuse, das eine Einlass-, eine Auslass- und eine Probenahmeöffnung ausbildet. Die Einlass- und die Auslassöffnung sind über einen in dem Gehäuse ausgebildeten Strömungsdurchgang miteinander verbunden, d. h. sie kommunizieren miteinander. In dem Gehäuse ist ferner ein Ventilkörper beweglich angeordnet. Dieser Ventilkörper ist von dem Gehäuse umschlossen. Der Ventilkörper wirkt mit einem gehäuseseitigen Ventilsitz zusammen. In einer Schließstellung verschließt der Ventilkörper die Probenahmeöffnung gegenüber dem Strömungsdurchgang. In einer Offenstellung erlaubt der Ventilkörper eine Strömung von dem Strömungsdurchgang zu der Probenahmeöffnung. Bei dem erfindungsgemäßen Probenahmeventil ist der Auslassöffnung ferner ein Rückflussverhinderer zugeordnet.

Der Rückflussverhinderer ist gemäß der bevorzugten Weiterbildung nach dem Anspruch 5 in der zuvor bereits diskutierten Weise im Gehäuse des Probenahmeventils angeordnet über einen Sicherungsring gesichert.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: ein Brauchwasser-Zufuhr- und Entnahmesystem; und
- Figur 2: eine vergrößerte Darstellung eines Probenahmeventils des in Figur 1 dargestellten Brauchwasser-Zufuhr- und Entnahmesystems mit in dessen Gehäuse aufgenommenem Rückflussverhinderer.

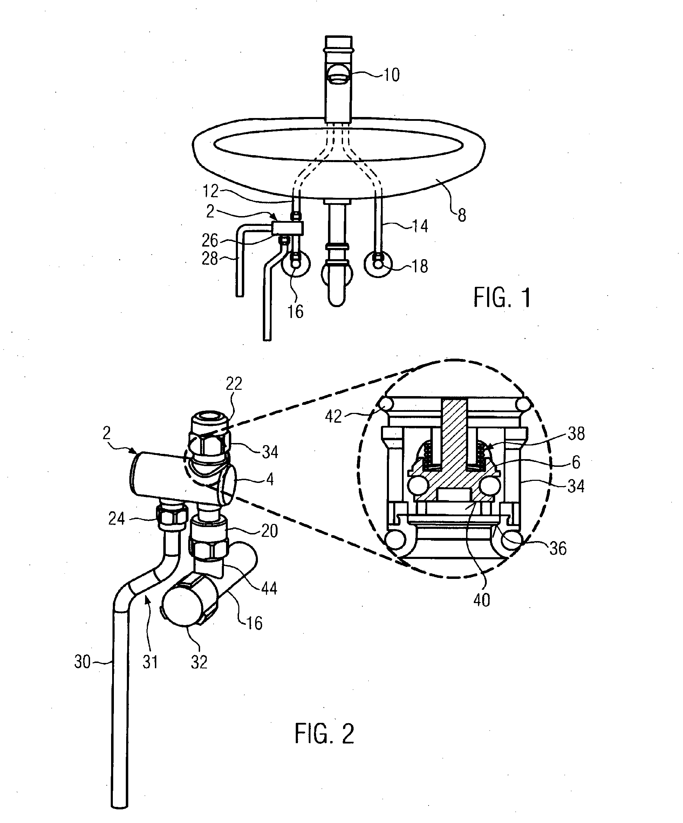

Das in Figur 1 dargestellte Brauchwasser-Zufuhr- und Entnahmesystem enthält einen Waschtisch 8 und eine an diesem befestigte Tischarmatur 10 in Form eines Wasserhahns. Zu dem Wasserhahn 10 führt eine Warmwasserleitung 12 und eine Kaltwasserleitung 14. Der Wasserhahn 10 ist als Mischarmatur ausgeführt, so dass bei Betätigen dieses Hahns mittels der Warmwasserleitung 12 und der Kaltwasserleitung 14 zugeführtes Wasser auf eine vorgegebene Temperatur gemischt und aus diesem ausgelassen werden kann.

Die Warmwasserleitung 12 bzw. die Kaltwasserleitung 14 ist jeweils über ein warmwasserseitiges Eckventil 16 bzw. kaltwasserseitiges Eckventil 18 an einen Warmwasser- bzw. Kaltwasser führenden Rohrstrang eines Gebäudes angeschlossen. Zwischen dem warmwasserseitigen Eckventil 16 und dem Wasserhahn 10 ist unterhalb des Waschtisches 8 unmittelbar in Fließrichtung des warmen Wassers hinter dem warmwasserseitigen Eckventil 16 an dieses das Probenahmeventil 2 angeschlossen.

Eine vergrößerte Darstellung des Probenahmeventils 2 und des mit diesem verbundenen warmwasserseitigen Eckventils 16 ist in Figur 2 dargestellt. Das Probenahmeventil 2 hat einen Einlassanschlussstutzen 20, einen Auslassanschlussstutzen 22 und einen Entnahmeanschlussstutzen 24. Der Einlassanschlussstutzen 20 ist derart ausgeführt, dass dieser passend für Eckventile mit abgehender Anschlussleitung 44 von z.B. 10 mm ausgebildet ist. Der Entnahmeanschlussstutzen 24 weist z.B. ein 3/8" Anschlussgewinde mit einer Gewindeverschraubung mit Konusquetschverschraubung auf.

Das Probenahmeventilgehäuse 4 ist T-förmig ausgeführt, wobei das Dach der T-Form durch die Einlass- und Auslassanschlussstutzen 20, 22 gebildet wird, die strömungsdurchgängig miteinander kommunizieren. In einer senkrecht zu dem Dach der T-Form abgehenden Basis des Gehäuses 4 ist ein Ventilelement eingebaut, das den von der Basis parallel zu dem Einlassanschlussstutzen 20 senkrecht abgehenden Entnahmeanschlussstutzen 24 für eine Strömungsverbindung zu einer Strömung zwischen dem Einlass- und dem Auslassanschlussstutzen 20, 22 freigibt bzw. verschließt. Das Ventilelement kann über eine Innenmehrkantaufnahme 26 durch einen Innensechskantschlüssel 28 betätigt werden. Bei geschlossenem Ventil kann das Wasser in Hauptströmungsrichtung des Probenameventils 2 (zwischen dem Einlassanschlussstutzen 20 und Auslassanschlussstutzen 22) ungehindert fließen. Bei geöffnetem Ventil wird Wasser über den Entnahmeanschlussstutzen 24 abgeleitet. So kann eine Probenahme ohne Betätigen des Wasserhahns 10 erfolgen.

Zur Sicherstellung der normkonformen Probenahme ist - wie in Figur 2 dargestellt - an den Entnahmeanschlussstutzen 24 ein Entnahmerohrstück 30 angeschraubt, das einen Versatz 31 aufweist. Dieser Versatz 31 ist derart bemessen, dass sich das Entnahmerohrstück 30 nicht mit einem Abschließhahn 32 des warmwasserseitigen Eckventils 16 kreuzt.

Neben dem Ventileinsatz enthält das Gehäuse 4 innerhalb eines zu dem Auslassanschlussstutzen 22 führenden Rohrstücks 34 ein in Figur 2 rechts vergrößert dargestelltes Rückschlagventil 6. Das Rückschlagventil 6 enthält in vertikaler Richtung eine Spann- bzw. Druckfeder 38, die eine Dichtfläche 40 gegen eine entsprechende innerhalb des Gehäuses 4 oberseitig vorgesehene Anlagefläche 36 drückt.

Wenn von dem warmwasserseitigen Eckventil 16 kein warmes Wasser bei geöffnetem Wasserhahn 10 durch die Warmwasserleitung 12 fließt, ist, durch die durch die Spannfeder 38 aufgedrängte dichtende Anlage der Dichtfläche 40 an der Anlagefläche 36 ein Rückfluss des Wassers vom Wasserhahn 10 zu dem Entnahmeanschlussstutzen 24 gesperrt. Das Rückschlagventil 6 ist mittels eines Sicherungsrings 42 verlierfest innerhalb des Gehäuses 4 gehalten. Demnach bildet das Gehäuse 4 mit dem in diesem enthaltenen Ventilelement und dem Rückschlagventil 6 das Probenahmeventil 2 aus.

### Bezugszeichenliste

- 2: Probenahmeventil
- 4: Gehäuse
- 6: Rückflussverhinderer/ Rückschlagventil
- 8: Waschtisch
- 10: Tischarmatur, Wasserhahn
- 12: Warmwasserleitung
- 14: Kaltwasserleitung
- 16: Warmwasserseitiges Eckventil
- 18: Kaltwasserseitiges Eckventil
- 20: Einlassanschlussstutzen
- 22: Auslassanschlussstutzen
- 24: Entnahmeanschlussstutzen
- 26: Innenmehrkantaufnahme
- 28: Innensechskantschlüssel
- 30: Entnahmerohrstück
- 31: Versatz
- 32: Abschließhahn
- 34: Rohrstück
- 36: Anlagefläche
- 38: Spannfeder/Druckfeder
- 40: Dichtfläche
- 42: Sicherungsring
- 44: Anschlussleitung

## Patentansprüche

1. Brauchwasser-Zufuhr- und Entnahmesystem für einen Waschtisch, wobei das Brauchwasser-Zufuhr- und Entnahmesystem wandseitig montierbare Eckventile (16, 18) für Kalt- und Warmwasser und eine Tischarmatur (10) enthält, die über Rohr- oder Schlauchstücke (12, 14) strömungsmäßig mit den zugeordneten Eckventilen (16, 18) verbunden ist,
**gekennzeichnet durch** ein zwischen dem Kalt- und/oder dem Warmwassereckventil (16, 18) und der Tischarmatur (10) angeordnetes Probenahmeventil (2) nach einem der Ansprüche 4 bis 5.

2. Brauchwasser-Zufuhr- und Entnahmesystem nach Anspruch 1, **dadurch gekennzeichnet, dass** der Rückflussverhinderer (6) über einen Sicherungsring (42) mit dem Gehäuse (4) des Probenahmeventils (2) gesichert ist.

3. Brauchwasser-Zufuhr- und Entnahmesystem nach Anspruch 1, **dadurch gekennzeichnet, dass** der Rückflussverhinderer (6) unverlierbar in dem Gehäuse (4) des Probenahmeventils (2) aufgenommen ist.

4. Probenahmeventil (2) für ein Brauchwasser-Zufuhr- und Entnahmesystem mit einem Gehäuse (4), das eine Einlass- (20), eine Auslass- (22) und eine Probenahmeöffnung (24) aufweist, wobei die Einlass- (20) und die Auslassöffnung (22) über einen in dem Gehäuse (4) ausgebildeten Strömungsdurchgang miteinander kommunizieren und wobei das Gehäuse (4) einen darin beweglich angeordneten Ventilkörper umschließt, der in seiner Schließstellung die Probenahmeöffnung (24) von dem Strömungsdurchgang absperrt und in einer Offenstellung den Strömungsdurchgang zu der Probenahmeöffnung (24) öffnet,
**dadurch gekennzeichnet, dass** im Strömungsdurchgang im Bereich der Auslassöffnung (22) ein Rückflussverhinderer (6) vorgesehen ist.

5. Probenahmeventil (2) für ein Brauchwasser-Zufuhr- und Entnahmesystem nach Anspruch 4, **dadurch gekennzeichnet, dass** der Rückflussverhinderer (6) über einen Sicherungsring (42) mit dem Gehäuse (4) des Probenahmeventils (6) gesichert ist.

## Claims

1. A domestic-water supply and withdrawal system for a washstand, wherein domestic-water supply and withdrawal system comprises wall-mountable angle valves (16, 18) for cold and hot water and a washstand fitting (10) which is coupled in flow communication with the associated angle valves (16, 18) via pipe or tubing sections (12, 14),
**characterized by** a sampling valve (2) according to anyone of claims 4 to 5, which arranged between the cold-water and/or hot-water angle valve (16, 18) and the washstand fitting (10).

2. The domestic-water supply and withdrawal system according to claim 1, **characterized in that** the backflow preventer (6) is secured via a retaining ring (42) to the housing (4) of the sampling valve (2).

3. The domestic-water supply and withdrawal system according to claim 1, **characterized in that** the backflow preventer (6) is captively received in the housing (4) of the sampling valve (2).

4. A sampling valve (2) for a domestic-water supply and withdrawal system comprising a housing (4) having an inlet (20), outlet (22) and sampling opening (24), wherein the inlet opening (20) and the outlet opening (22) are in communication with each other via a flow passage formed in the housing (4), and wherein the housing (4) encloses a valve body movably arranged therein, which in its closing position shuts off the sampling opening (24) from the flow passage and which in an open position opens the flow passage to the sampling opening (24), **characterized in that** a backflow preventer (6) is arranged in the flow passage in the region of the outlet opening (22).

5. The sampling valve (2) for a domestic-water supply and withdrawal system according to claim 4, **characterized in that** the backflow preventer (6) is secured via a retaining ring (42) to the housing (4) of the sampling valve (2).

## Revendications

1. Système d'alimentation et de prélèvement d'eau sanitaire pour un plan-lavabo ou lavabo, le système d'alimentation et de prélèvement d'eau sanitaire englobant des robinets d'arrêt équerre (16, 18) pour eau chaude et eau froide, qui peuvent être montés contre le mur ou la cloison, et une robinetterie de lavabo (10), qui est reliée sur le plan de l'écoulement aux robinets d'arrêt équerre (16, 18) associés, par l'intermédiaire de tronçons de tubes ou de flexibles (12, 14), **caractérisé par** une vanne de prélèvement d'échantillons (2) selon l'une des revendications 4 à 5, qui est agencée entre le robinet d'arrêt équerre (16, 18) pour l'eau froide et/ou l'eau chaude et la robinetterie de lavabo (10).

2. Système d'alimentation et de prélèvement d'eau sanitaire selon la revendication 1, **caractérisé en ce que** l'élément anti-reflux ou anti-retour (6) est maintenu de manière sécurisée dans le corps (4) de la vanne de prélèvement d'échantillons (2), par l'intermédiaire d'une bague d'arrêt (42).

3. Système d'alimentation et de prélèvement d'eau sanitaire selon la revendication 1, **caractérisé en ce que** l'élément anti-reflux ou anti-retour (6) est logé de manière imperdable dans le corps (4) de la vanne de prélèvement d'échantillons (2).

4. Vanne de prélèvement d'échantillons (2) pour un système d'alimentation et de prélèvement d'eau sanitaire, comprenant un corps (4), qui présente une ouverture d'entrée (20), une ouverture de sortie (22) et une ouverture de prélèvement d'échantillons (24), vanne de prélèvement d'échantillons
dans laquelle l'ouverture d'entrée (20) et l'ouverture de sortie (22) communiquent l'une avec l'autre par l'intermédiaire d'un passage d'écoulement formé dans le corps (4), et
dans laquelle le corps (4) entoure une pièce d'obturation de vanne, qui y est montée de manière mobile, et qui, dans sa position de fermeture, assure l'isolement de l'ouverture de prélèvement d'échantillons (24) du passage d'écoulement, et dans sa position d'ouverture, ouvre le passage d'écoulement vers l'ouverture de prélèvement d'échantillons (24), **caractérisée en ce que** dans le passage d'écoulement est prévu, dans la zone de l'ouverture de sortie (22), un élément anti-reflux ou anti-retour (6).

5. Vanne de prélèvement d'échantillons (2) pour un système d'alimentation et de prélèvement d'eau sanitaire, selon la revendication 4, **caractérisée en ce que** l'élément anti-reflux ou anti-retour (6) est maintenu de manière sécurisée dans le corps (4) de la vanne de prélèvement d'échantillons (2), par l'intermédiaire d'une bague d'arrêt (42).
